# EUROPEAN PATENT APPLICATION

(11) **EP 1 878 356 A1**
(43) Date of publication of application: **16.01.2008**
(21) Application number: 07012230.4
(22) Date of filing: 22.06.2007
(51) Int. Cl.: A46B 13/00

(54) **Cleaning band construction for making motor vehicle washing system brushes**

(30) Priority: 13.07.2006 IT MI20061363
(71) Applicant: FAVAGROSSA EDOARDO S.r.l., 26040 Roncadello di Casalmaggiore (Cremona) (IT)
(72) Inventor: Favagrossa, Francesco, 26040 Roncadello di Casalmaggiore (CREMONA) (IT)
(74) Representative: Cicogna, Franco

(57) **Abstract**

A cleaning band construction for making motor vehicle washing system brushes comprises an elongated plate body made of a comparatively hard or stiff flexible material, which can be coupled to a central support assembly of a rotary brush, and at least a comparatively soft flexible element, which can be coupled to a free end portion of the plate body.

## Description

### BACKGROUND OF THE INVENTION

The present invention relates to a cleaning band construction for rotary washing brushes used in motor vehicle washing systems.

As is known, automatic motor vehicle washing systems conventionally comprise rotary washing brushes, generally comprising a brush support assembly, having a cylindric shape, and coupled to a rotary element.

On the outer surface of the supporting assembly are applied a plurality of adjoining flexible cleaning elements, having a respective end portion thereof coupled to said supporting assembly, perpendicularly to the latter.

The automatic cleaning and washing of a motor vehicle body are performed by causing a plurality of the above mentioned washing brushes to turn, thereby in turn causing the flexible elements, held in a preset configuration due to the centrifugal force generated by the rotary movement of the brushes, to impact or impinge against the motor vehicle body, through interposition of water and/or suitable cleaning solutions or emulsions.

Prior cleaning elements are conventionally made in the form of threads, felts or strips starting from a polyethylene material.

In the thread configuration, the end free portion of each thread or "bristle" forming the washing brush, is pressed, by a specifically designed pressing or crashing method, called "feathering", to flatten each thread or bristle, to distribute its impinging pressure on a larger surface, thereby increasing the corresponding cleaning surface.

At the above mentioned end portion, which, after the above mentioned treatment processing, has a given roughness and porosity, minute particles, of stone or metal materials, collected by the already cleaned surfaces, are deposited and/or collected.

The above particles, in particular, are locked or latched in the rough and porous parts, to provide abrading regions which can scratch away paint from the motor vehicle bodies being subjected to washing, which would be very undesirable.

A felt material, on the other hand, has very satisfactory cleaning features, but, because of its high liquid absorption capabilities, a felt pattern has the drawback that its weight is greatly increased, with a consequent unbalancing of the washing brush, under the rotary movement of said brush, thereby the overall washing system becomes very difficult to be controlled.

Moreover, an increased weight of the brushing washes causes a corresponding great increase of the power consume, and a greater wear on the washing brush rotary components, and, consequently, a great number of failures in the motor vehicle washing systems.

### SUMMARY OF THE INVENTION

Accordingly, the aim of the present invention is to provide such a cleaning band construction for motor vehicle washing system brushes which overcomes the above mentioned drawbacks affecting the prior art.

Within the scope of the above mentioned aim, a main object of the invention is to provide such a cleaning band construction which has a great and optimum cleaning surface, together with improved mechanical characteristics.

Yet another object of the present invention is to provide such a cleaning band construction which can be easily and quickly connected to the washing brush supporting assembly and which has a very long operating life.

Yet another object of the present invention is to provide such a cleaning band construction allowing to make variable geometry rotary washing brushes, i.e. washing brushes having a constructional geometry depending on the washing brush diameter.

According to one aspect of the present invention, the above mentioned aim and objects, as well as yet other objects, which will become more apparent hereinafter, are achieved by a cleaning band construction for making motor vehicle washing system brushes, characterized in that said cleaning band construction comprises an elongated plate body made of a comparatively rigid flexible material, adapted to be coupled to a central supporting assembly of a rotary washing brush, and at least a comparatively soft flexible element, which can be coupled to a respective free end portion of said plate body.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative example, in the accompanying drawings, where:

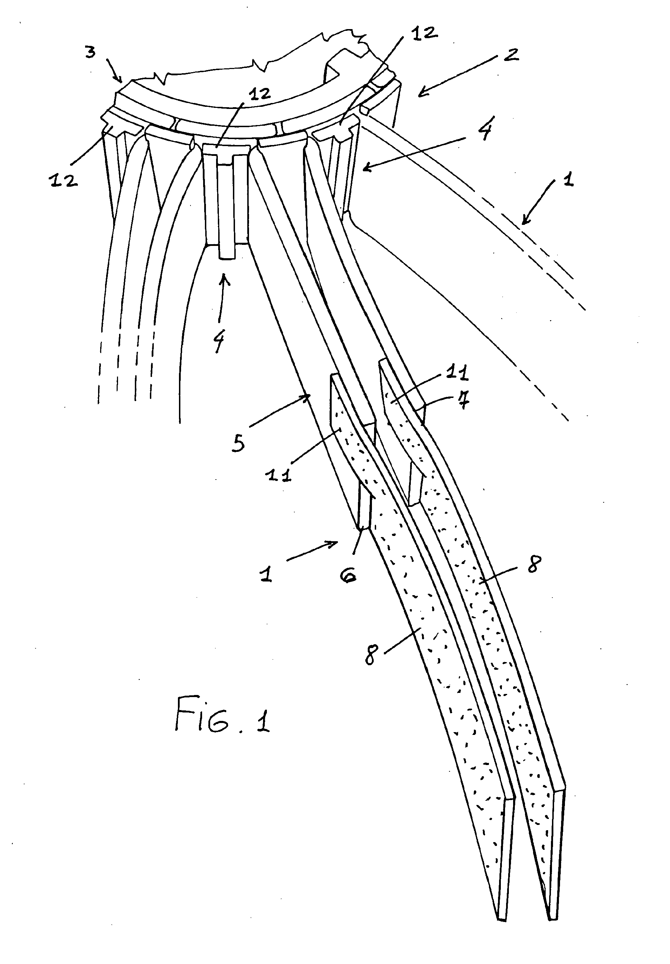

Figure 1 is a perspective view partially showing a rotary washing brush including cleaning band construction or elements according to the present invention;

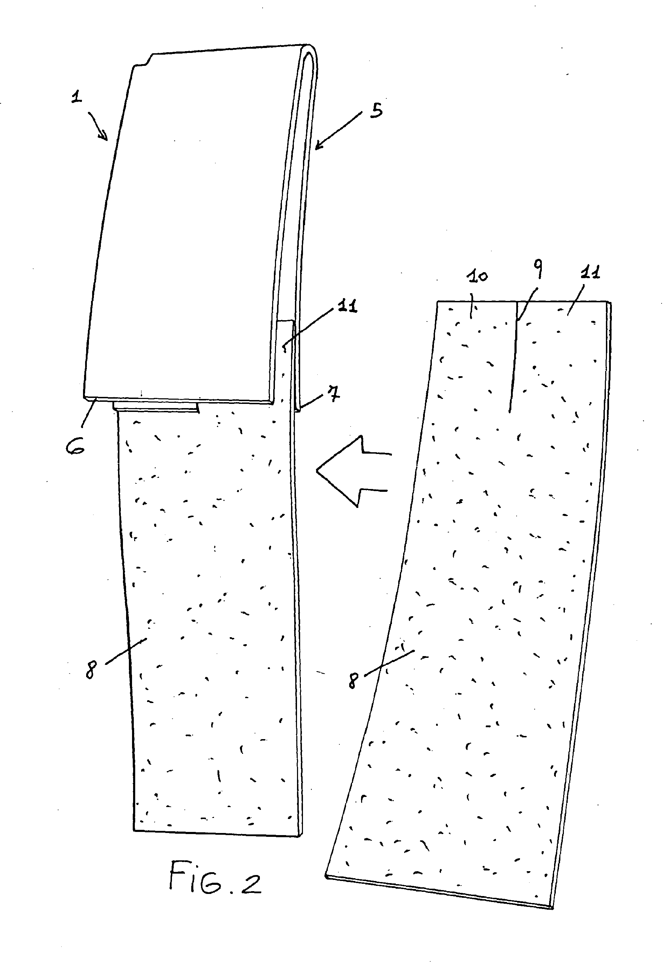

Figure 2 is a perspective exploded view illustrating in further details that same cleaning band construction;

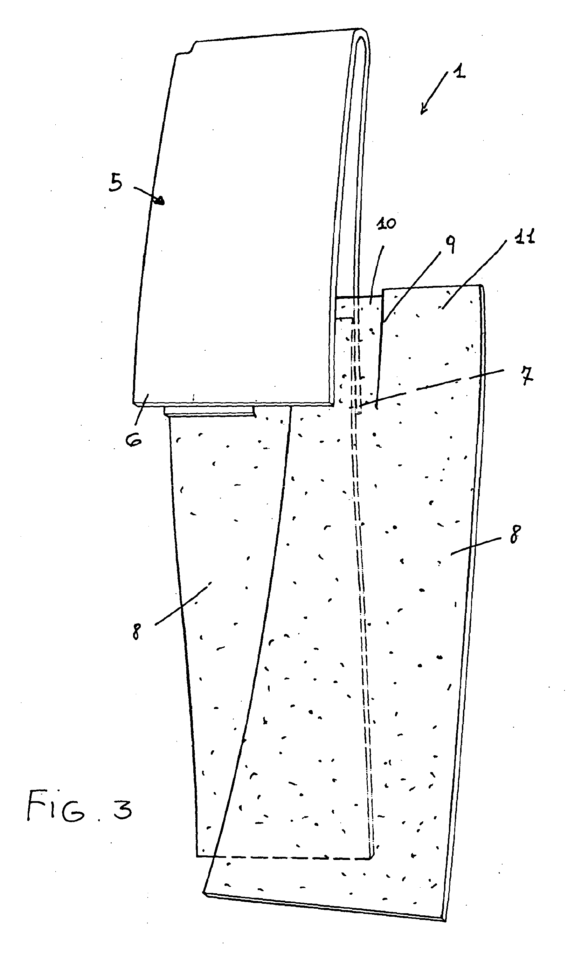

Figure 3 is a further perspective view, similar to figure 2, showing in further details a first assembling operating step for assembling the cleaning band construction or element according to the present invention; and

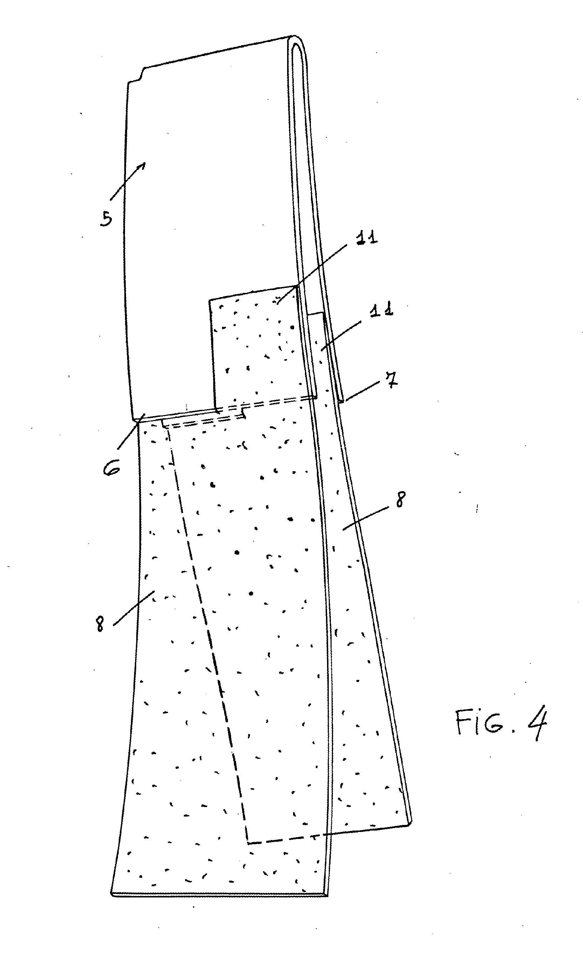

Figure 4 is a further perspective view, similar to figure 3, showing the cleaning band construction or element according to the present invention, in an assembled condition.

### DESCRIPTION OF THE PREFERRED EMBODIMENTS

With reference to the number references of the above mentioned figures, the improved cleaning band construction or element according to the present invention, which has been generally indicated by the reference number 1, has been specifically designed for making a rotary washing brush 2, including a plurality of cleaning band constructions or elements 1, coupled to a central supporting assembly 3, through coupling means 4.

As shown, each cleaning band construction or element 1 comprises a plate body 5 which is advantageously made of a closed cell foamed plastic material, or of a non foamed plastic material, or of a rubber material.

The plate body 5 has a substantially elongated configuration, according to the longitudinal axis of the cleaning band construction, and is bent through 180° to have two free end portions 6 and 7 and a cleaning banding region to be clamped or coupled to the central supporting assembly 3.

According to the present invention, to the free end portions 6 and 7 of the plate body 5, plate-like elements 8, made of a felt or other like material, have been applied.

More specifically, the felt end portions, which have been reduced to an indispensable minimum, provide the advantage that all the water absorbed thereby can be quickly drained, with the consequent further advantage that, during and after the motor vehicle drying operation, none water drop will fall from the washing brush on the motor vehicle body.

In particular, said plate like elements 8 are coupled to said free end portions 6 and 7 of the plate body 5 by seaming or glueing binding methods.

Preferably, each said plate-like element 8 comprises, at the end portion thereof to be coupled to the corresponding end portion of the plate body 5, a cut-out 9 dividing said end portion into a first flap 10 and a second flap or strip 11.

Thus, it is possible to associate the first flap or strip 10 to a side of the end portion of the plate like body and the second flap or strip 11 to the other side of the end portion of the plate body, to provide a very safe connection of the plate like body and the two respective plate elements.

More specifically, the cleaning band construction or element 2 is coupled to said central supporting assembly 3 by coupling means 4 comprising a clamping rod 12, which is engaged in one of the slots formed along the directrix lines of the central support 3.

After the above mentioned engagement, the end portion of the bar or rod 12 will strictly and safely contact the supporting assembly 3, thereby it will be possible to perform safety welding operations.

The coupling means according to the present invention provide a very safe coupling without the need of using specifically designed driving tools and, moreover, allow to reduced to a minimum the physical effort necessary for the coupling.

The rod or bar element 12 is designed as to hold the cleaning band construction or element 1 clamped to the supporting assembly or cylinder 3.

The width of said rod element 12 is designed to provide a plurality of equispaced slots.

It has been found that the invention fully achieves the intended aim and objects.

In fact, the invention provides a cleaning band construction or element which has a base portion of comparatively hard or stiff nature, which does not absorb water, and is moreover provided with sufficiently soft end portions.

This allows to make rotary washing brush assembly of a comparatively small weight, with a consequent power savings and an improved washing operation.

Thus, the cleaning band construction according to the present invention provides a washing assembly operating in very "delicate" manner on the surfaces to be washed, thereby reducing the operation vibrations and assuring a longer life of the washing member supporting bearings.

Furthermore, the rigid nature of the cleaning band construction base provides a very even washing brush, even in a rest condition thereof, that is as the washing brush is not rotatively driven, such as in the motor vehicle washing system switching on and off operations.

Moreover, the felt tips of the cleaning band elements allows to provide a very efficient washing operation, while eliminating the disadvantage of a possible weight increase due to the absorption of water, as in the prior art cleaning band elements fully made of a felt material.

In practicing the invention, the used materials, as well as the contingent size and shapes, can be any, depending on requirements.

## Claims

1. A cleaning band construction for motor vehicle washing system brushes, **characterized in that** said cleaning band construction comprises an elongated plate body, made of a comparatively rigid flexible material, to be coupled to a central supporting assembly of a rotary washing brush, and at least a comparatively soft flexible element, to be coupled to a free end portion of said plate body.

2. A cleaning band construction for rotary washing brushes, according to claim 1, **characterized in that** said plate body is made of a closed cell foamed plastic material or a rubber material.

3. A cleaning band construction for rotary washing brushes, according to claim 1, **characterized in that** said flexible element is made of a felt material.

4. A cleaning band construction for rotary washing brushes, according to claim 1, **characterized in that** said plate body has a substantially elongated configuration, extending along a longitudinal axis of said cleaning band construction, and being bent through 180° to define two free end portions and a bending region adapted to be clamped to said central supporting assembly.

5. A cleaning band construction for rotary washing brushes, according to claim 1, **characterized in that** a said flexible element is applied to each free end portion of said plate body.

6. A cleaning band construction for rotary washing brushes, according to claim 1, **characterized in that** said flexible plate element is coupled to a respective free end portion of said plate body, by a seaming or glueing operation.

7. A cleaning band construction for rotary washing brushes, according to claim 1, **characterized in that** each said flexible plate element comprises; at an end portion thereof to be coupled to a corresponding end portion of said plate body, a cut dividing said end portion into a first flap and a second flap, thereby allowing to connect said first flap to a side of a corresponding end portion of said plate body and the second flap to the other side of said end portion of said plate body.

8. A cleaning band construction for rotary washing brushes, according to claim 1, **characterized in that** said cleaning band construction is coupled to said supporting assembly by coupling means comprising a clamping rod engaged in a slot formed along a directrix line of said central supporting assembly.

9. A cleaning band construction for rotary washing brushes, according to claim 1, **characterized in that** said cleaning band construction comprises one or more of the disclosed and/or illustrated characteristics.
